(19) **Europäisches Patentamt / European Patent Office / Office européen des brevets**

(11) **EP 4 010 747 B1**

(12) # EUROPÄISCHE PATENTSCHRIFT

(45) Veröffentlichungstag und Bekanntmachung des Hinweises auf die Patenterteilung:
**08.03.2023   Patentblatt 2023/10**

(21) Anmeldenummer: **19773798.4**

(22) Anmeldetag: **20.09.2019**

(51) Internationale Patentklassifikation (IPC):
**G02B 27/00** *(2006.01)*

(52) Gemeinsame Patentklassifikation (CPC):
**G02B 27/00**

(86) Internationale Anmeldenummer:
**PCT/EP2019/075386**

(87) Internationale Veröffentlichungsnummer:
**WO 2021/052606 (25.03.2021 Gazette 2021/12)**

(54) **VORRICHTUNG ZUR ERZEUGUNG VON EINZELPHOTONEN**

DEVICE FOR GENERATING INDIVIDUAL PHOTONS

DISPOSITIF POUR GÉNÉRER DES PHOTONS INDIVIDUELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.06.2022   Patentblatt 2022/24**

(73) Patentinhaber:
- **Humboldt-Universität zu Berlin**
  **10099 Berlin (DE)**
- **University of Copenhagen**
  **1165 Copenhagen K (DK)**

(72) Erfinder:
- **SCHNEEWEIß, Philipp**
  **12489 Berlin (DE)**
- **VOLZ, Jürgen**
  **12489 Berlin (DE)**
- **RAUSCHENBEUTEL, Arno**
  **12489 Berlin (DE)**
- **MAHMOODIAN, Sahand**
  **30167 Hannover (DE)**
- **SØRENSEN, Anders Søndberg**
  **2100 København (DK)**

(74) Vertreter: **KLIMENT & HENHAPEL**
**Patentanwälte OG**
**Gonzagagasse 15/2**
**1010 Wien (AT)**

(56) Entgegenhaltungen:
- **JUAN CAMILO LOPEZ CARRENO ET AL: "Joint subnatural-linewidth and single-photon emission from resonance fluorescence", ARXIV.ORG, CORNELL UNIVERSITY LIBRARY, 201 OLIN LIBRARY CORNELL UNIVERSITY ITHACA, NY 14853, 13. Februar 2018 (2018-02-13), XP081223023,**
- **KORNOVAN D F ET AL: "Light interaction and quantum transport in atomic chain chirally coupled to a waveguide", 2017 11TH INTERNATIONAL CONGRESS ON ENGINEERED MATERIALS PLATFORMS FOR NOVEL WAVE PHENOMENA (METAMATERIALS), IEEE, 27. August 2017 (2017-08-27), Seiten 262-264, XP033256355, DOI: 10.1109/METAMATERIALS.2017.8107912 [gefunden am 2017-11-14]**
- **CHRISTIAN KURTSIEFER ET AL: "Stable Solid-State Source of Single Photons", PHYSICAL REVIEW LETTERS, Bd. 85, Nr. 2, 10. Juli 2000 (2000-07-10), Seiten 290-293, XP055697945, DOI: 10.1103/PhysRevLett.85.290**
- **AXEL KUHN ET AL: "Deterministic Single-Photon Source for Distributed Quantum Networking", PHYSICAL REVIEW LETTERS, Bd. 89, Nr. 6, 19. Juli 2002 (2002-07-19), XP055708401, US ISSN: 0031-9007, DOI: 10.1103/PhysRevLett.89.067901**

- CHEN ZIHAO ET AL: "Deterministic two-photon controlled phase gate by exploiting nonlinear pi-phase shift in photonic molecule generations", SPIE - INTERNATIONAL SOCIETY FOR OPTICAL ENGINEERING. PROCEEDINGS, S P I E - INTERNATIONAL SOCIETY FOR OPTICAL ENGINEERING, US, Bd. 10933, 4. März 2019 (2019-03-04), Seiten 109330C-109330C, XP060119106, ISSN: 0277-786X, DOI: 10.1117/12.2517035 ISBN: 978-1-5106-3549-4
- EISAMAN M ET AL: "Invited Review Article: Single-photon sources and detectors", REVIEW OF SCIENTIFIC INSTRUMENTS, AIP, MELVILLE, NY, US, Bd. 82, Nr. 7, 27. Juli 2011 (2011-07-27), Seiten 71101-71101, XP012146546, ISSN: 0034-6748, DOI: 10.1063/1.3610677 in der Anmeldung erwähnt

**Beschreibung**

GEBIET DER ERFINDUNG

Die vorliegende Erfindung betrifft eine Vorrichtung zur Erzeugung von Einzelphotonen mit einer Energie E, umfassend eine Vielzahl von Quantenemittern, die zumindest einen bestimmten Übergang mit der Energie E von einem Energieniveau N* auf ein darunterliegendes Energieniveau N1 aufweisen.

STAND DER TECHNIK

Einzelphotonenquellen, d.h. Lichtquellen, die nur einzelne Photonen und nie zwei Photonen gleichzeitig emittieren, spielen eine zentrale Rolle für viele Anwendungen in der Quantentechnologie, insbesondere beim Quantenschlüsselaustausch. Sie werden z.B. als Lichtquelle für Quantenkryptographie in vielen kommerziellen Geräten eingesetzt, da in solchen Anwendungen zwei gleichzeitig präsente Photonen ein Sicherheitsrisiko darstellen. In diesem Fall könnte bspw. ein Abhörer unbemerkt eines der beiden Photonen abzweigen und damit Information über den ausgetauschten Schlüssel erhalten.

In der Forschung werden zur Erzeugung von Einzelphotonen zum Teil sehr aufwendige Verfahren verwendet, die z.B. auf interagierenden Rydberg-Atomen basieren (vgl. z.B. F. Ripka et al., Science 362, 446 (2018)) und die aufgrund ihrer Komplexität in der Anwendung praktisch keine Rolle spielen. Eine Übersicht über eine Vielzahl an Erzeugungsmöglichkeiten für Einzelphotonen findet sich z.B. in M.D. Eisaman et al., Review of Scientific Instruments 82, 071101 (2011).

Der Artikel J.C. Lopez Carreno et al: Joint subnatural-linewidth and single-photon emission from resonance fluorescence, arXiv:1802.04771v3, Quantum Sci. Technol. 3, 045001 (2018) beschreibt eine Einzel-Photonen-Quelle auf der Basis eines Zwei-Niveau-Systems.

Der Artikel D.F. Kornovan et al: Light interaction and quantum transport in atomic chain chirally coupled to a waveguide, 2017 11th International Congress on Engineered Materials Platforms for Novel Wave Phenomena (Metamaterials) beschreibt die Wechselwirkung einer Kette von Quantenemittern mit dem Lichtfeld einer optischen Faser.

Am häufigsten kommen heutzutage drei Verfahren zum Einsatz, um Einzelphotonenquellen bei praktischen Anwendungen zu realisieren:

1. Stark abgeschwächte Laserpulse: Hierbei werden einzelne Laserpulse so stark abgeschwächt, dass die Wahrscheinlichkeit p in einem einzelnen Laserpuls ein Photon zu haben, sehr gering ist (typischerweise ca. p=10%). Die Wahrscheinlichkeit zwei Photonen pro Puls zu erhalten, ist gegeben durch $p^2$ (=1% für p=10%) und damit wesentlich geringer als die Einzelphoton-Wahrscheinlichkeit. Solche Quellen sind zwar einfach zu realisieren, stellen aber keine wirklichen Einzelphotonenquellen dar, da immer eine Wahrscheinlichkeit für zwei gleichzeitig auftretende Photonen vorhanden ist. Jene kann nur auf Kosten der Einzelphoton-Wahrscheinlichkeit reduziert werden. Bei Quanten-Kryptographieprotokollen führt dies zu fundamentalen Einschränkungen in den Datentransferraten bzw. der Sicherheit des Protokolls.

2. Einzelne Quantenemitter: Alternativ werden Einzelphotonenquellen eingesetzt, die die Emissionseigenschaften einzelner Quantenemitter wie z.B. einzelner Atome oder Moleküle nutzen. Dazu werden diese typischerweise durch Beleuchtung mit einem externen Lichtfeld angeregt. Beim Zurückfallen in den Grundzustand wird dabei genau ein Photon emittiert, niemals zwei. Sammelt man diese, typischerweise in alle Richtungen emittierten Photonen auf, so hat man eine Einzelphotonenquelle. Zwar kann man sich bei diesen Quellen sicher sein, dass niemals zwei Photonen gleichzeitig kommen, doch weisen diese Quellen auch gravierende Nachteile auf:

- Geringe Photonenausbeute; typischerweise werden die meisten Photonen nicht in die Aufsammeloptik, d.h. nicht in eine klar definierte Mode, emittiert, weshalb üblicherweise nur wenige Prozent der emittierten Photonen aufgesammelt werden und niedrige Einzelphotonenraten resultieren.

- Teilweise komplexer Aufbau; insbesondere wenn Resonatoren eingesetzt werden, um die Aufsammeleffizienz zu erhöhen, muss sichergestellt werden, dass die Frequenz der Resonatormode mit der Frequenz des emittierten Lichts übereinstimmt.

- Viele in Einzelphotonenquellen eingesetzte Emitter weisen eine inhomogene Verbreiterung der Emissionswellenlänge auf, insbesondere wenn die Emitter dabei in Festkörper eingebaut sind. In diesem Fall sind die emittierten Photonen nicht mehr für alle Protokolle geeignet. Dadurch ist die jeweilige Quelle nicht mehr vielseitig einsetzbar.

3. Parametrische Down-Conversion: Bei solchen Quellen wird ein nichtlinearer Kristall durch einen Laserstrahl gepumpt. In einem spontanen Prozess wird dabei zu bestimmten Zeiten zufällig ein Photon des Pumplasers in zwei Photonen geringerer Frequenz umgewandelt. Spaltet man dieses Photonenpaar in zwei Strahlen auf und triggert die Anwendung darauf, dass in einem der beiden Strahlen ein Photon vorliegt, dann weiß man auch, dass ein Photon im zweiten Strahl vorhanden ist. Somit erhält man eine Einzelphotonenquelle. Zwar erhält man aufgrund des Trigger-Mechanismus' eine zusätzliche Information, wann genau ein einzelnes Photon im anderen Strahl vorliegt, doch weisen diese Quellen auch gravierende Nachteile auf:

- typischerweise große spektrale Bandbreite und relativ zur Bandbreite (die im Idealfall einfach umgekehrt proportional zur Photonenpaar-Rate ist) geringe Photonenpaar-Raten.
- bei dem stochastischen Prozess besteht auch die Möglichkeit, dass zwei Photonenpaare entstehen, d.h. es gibt eine signifikante Wahrscheinlichkeit, dass statt eines Einzelphotons ein Doppelphoton bzw. zwei Photonen gleichzeitig ausgegeben wird bzw. werden.

AUFGABE DER ERFINDUNG

Es ist Aufgabe der vorliegenden Erfindung, eine Vorrichtung zur Erzeugung von Einzelphotonen bzw. eine Einzelphotonenquelle zur Verfügung zu stellen, die die oben genannten Nachteile vermeidet. Insbesondere soll der Aufbau der Vorrichtung einfach und robust sein. Bevorzugt soll die Vorrichtung eine möglichst gute Einzelphotonencharakteristik und gleichzeitig hohe Einzelphotonenraten aufweisen.

DARSTELLUNG DER ERFINDUNG

Im Zusammenhang mit der Erzeugung von Doppelphotonen bzw. von Paaren gleichzeitig emittierter Photonen wurde kürzlich festgestellt, dass ein Ensemble von nicht interagierenden Quantenemittern in Form von Atomen als spektral selektiver Filter wirken kann, der resonante Einzelphotonen eines transmittierten Lichts exponentiell abschwächt. Hingegen werden - auch bei schwacher Kopplung der Atome ans einfallende Licht - resonante Photonenpaare bzw. eine resonante Zweiphotonen-Komponente des einfallenden Lichts resonant so gestreut, dass ein Photonenpaar bzw. zwei korrelierte Photonen in zwei Frequenzseitenbändern entstehen, wobei eines der Seitenbänder "blauverschoben", also zu größeren Energien hin verschoben, ist und das andere Seitenband "rotverschoben", also zu kleineren Energien hin. Diese korrelierten Photonen werden auf ihrem restlichen Weg durch das Atomensemble in ihrer Intensität aufgrund der nun nicht mehr resonanten Energien weniger stark abgeschwächt als die Einzelphotonen. Effektiv lässt sich somit durch eine hinreichend große Zahl von Atomen eine Quelle von Photonenpaaren erzeugen, vgl. S. Mahmoodian et al., Physical Review Letters 121, 143601 (2018).

Kern der vorliegenden Erfindung ist die überraschende Erkenntnis, dass es im beschriebenen Fall in Abhängigkeit von der Anzahl der Atome zu einer perfekten destruktiven Interferenz zwischen einer an diesen Atomen gestreuten Zweiphotonen-Komponente des Lichts und einer nicht gestreuten Zweiphotonen-Komponente des Lichts kommen kann. Genauer, kann es zu einer perfekten destruktiven Interferenz kommen zwischen jener Zweiphotonen-Komponente, die ohne Wechselwirkung mit den Atomen in einer bestimmten Beobachtungsrichtung bzw. zu einem gewissen Beobachtungsort transmittiert (in obiger Diktion die "nicht gestreute Zweiphotonen-Komponente"), und jener Zweiphotonen-Komponente, die durch die Atome in dieselbe Beobachtungsrichtung bzw. zu demselben Beobachtungsort gestreut wird. Bemerkenswerterweise zeigen Einzelphotonen an diesem Arbeitspunkt noch endliche Transmission, sodass sich auf diese Weise eine Einzelphotonenquelle erzeugen lässt. Höherzahlige Photonenkomponenten des Lichts, d.h. eine Dreiphotonen-Komponente, Vierphotonen-Komponente etc., spielen außer bei extrem hohen Intensitäten statistisch keine Rolle, sodass das transmittierte Licht praktisch ausschließlich aus Einzelphotonen besteht. D.h. man erhält in der Beobachtungsrichtung bzw. am Beobachtungsort einen Strom aus Photonen, die nicht zusammen sondern einzeln propagieren.

Erst wenn man die Anzahl der Atome weiter erhöht, erhält man den oben geschilderten gegenteiligen Effekt, der zu einer Lichtquelle führt, bei der Photonenpaare dominieren.

Selbstverständlich können statt einzelner Atome auch andere Quantenemitter verwendet werden.

Entsprechend ist es bei einer Vorrichtung zur Erzeugung von Einzelphotonen mit einer Energie E erfindungsgemäß vorgesehen, dass die Vorrichtung eine Vielzahl von Quantenemittern umfasst, die zumindest einen bestimmten Übergang mit der Energie E von einem Energieniveau N* auf ein darunterliegendes Energieniveau N1 aufweisen, wobei die Quantenemitter im Bereich eines von einem ersten Bereich zu einem zweiten Bereich verlaufenden Propagationspfads angeordnet sind, die Vorrichtung weiters umfassend mindestens eine Lichtquelle zur Abgabe von Licht, vorzugsweise einer Lichtmode, zur Ausbreitung entlang des Propagationspfads, wobei das Licht die Energie E zur resonanten Anregung des Energieniveaus N* aufweist, wobei die Quantenemitter derart angeordnet sind, dass lediglich genau Z Quantenemitter beleuchtet werden, die entlang des Propagationspfads eine optische Dicke $\tau > 0$ für das Licht ausbilden, wobei die Anzahl Z in einem Bereich Z0 $\pm$ 10% liegt und wobei Z0 jene Anzahl ist, bei der im zweiten Bereich eine destruktive Interferenz zwischen einer an diesen Z0 Quantenemittern gestreuten Zweiphotonen-Komponente des Lichts und einer nicht gestreuten Zweiphotonen-Komponente des Lichts maximal ist.

Unter "Vielzahl von Quantenemittern" ist "mindestens zwei Quantenemitter" zu verstehen. In der Praxis sind Ausführungsvarianten mit unterschiedlichster Anzahl an Quantenemittern möglich, von einigen wenigen, z.B. 3 oder 5, Quantenemittern bis zu mehr als $10^4$ Quantenemittern.

Es sei bemerkt, dass die Energie E bzw. das Licht nicht im optisch sichtbaren Bereich liegen müssen. D.h. die vorliegende Erfindung ist prinzipiell nicht auf einen bestimmten Bereich des elektromagnetischen Spektrums beschränkt. Es kann theoretisch ein Einzelphotonenstrom erzeugt werden, bei dem die Photonen eine deutlich niedrigere Energie als optisch sichtbares Licht - beispielsweise im Terahertzbereich oder im Mikrowellenbereich - aufweisen oder eine deutlich höhere Energie als optisch sichtbares Licht - beispielsweise im Röntgenbereich.

Grundsätzlich ist der Propagationspfad ein räumlicher Abschnitt, in welchem sich das Licht vom ersten Bereich zum zweiten Bereich ausbreitet.

Wie aus dem oben Gesagten hervorgeht, ist die destruktive Interferenz im zweiten Bereich wesentlich, wobei der zweite Bereich gewissermaßen dem oben genannten Beobachtungsort entspricht. Mit anderen Worten ist das auslaufende (nicht das einlaufende) Licht bzw. die ausgehende (nicht die beleuchtende) optische Mode entscheidend für die destruktive Interferenz der gestreuten und ungestreuten Zweiphotonen-Komponenten. Durch besagte destruktive Interferenz kann in diesem auslaufenden Licht bzw. in dieser auslaufenden optischen Mode eine praktisch perfekte Einzelphotonencharakteristik hergestellt werden.

Im besonders einfachen Fall einer Laserquelle und keiner weiteren optischen Elemente ist der Propagationspfad typischerweise ein sehr enger räumlicher Bereich rund um eine gerade Linie, wobei sich dieser räumliche Bereich vorzugsweise nicht oder nur kaum aufweitet. Es sei an dieser Stelle bemerkt, dass nicht zwingend eine Laserquelle für die erfindungsgemäße Vorrichtung vorgesehen werden muss. Weiters können ein oder mehrere optische Elemente vorgesehen sein, die dafür sorgen, dass der Propagationspfad von der oben geschilderten einfachen Form abweicht, wobei der Propagationspfad insbesondere nicht einer geraden Linie folgen muss.

Zur mindestens einen Lichtquelle ist zu sagen, dass diese auch mehrere Einzellichtquellen, z.B. mehrere Laserdioden, und ggf. zugehörige optische Elemente, insbesondere Linsen und/oder Spiegel und/oder Filter, umfassen kann. Unter Lichtmode ist hier und im Folgenden vor allem eine Beschränkung des von der Lichtquelle ausgesandten Lichts auf einen definierten räumlichen Bereich zu verstehen. In diesem Sinne können typischerweise Laser - auch ohne zusätzliche optische Elemente - als Quelle von Lichtmoden angesehen werden, unabhängig davon, ob der Querschnitt des abgestrahlten Laserlichts eine Grund- bzw. Fundamentalmode oder höhere Moden oder eine Multimodenstruktur aufweist.

Selbstverständlich ist es so, dass jeder Übergang von einem angeregten auf ein darunterliegendes Energieniveau nicht durch eine unendlich scharf definierte Energie charakterisiert ist, sondern eine gewisse Bandbreite aufweist, die gemäß der Heisenbergschen Unschärferelation umgekehrt proportional zur Lebensdauer des jeweiligen angeregten Zustands bzw. Energieniveaus ist. Entsprechend bedeutet "Licht mit einer Energie E zur resonanten Anregung des Energieniveaus N*" keinen perfekt scharfen Energiewert E des Lichts, sondern dass das Licht mit einer Bandbreite rund um den Energiewert E vorliegt, wobei die Bandbreite von derselben Größenordnung wie oder kleiner als die Bandbreite des Übergangs vom Energieniveau N* auf das Energieniveau N1 sein muss.

Weiters sei angemerkt, dass die konkrete Energie eines Übergangs und damit die Energie des Lichts zur resonanten Anregung des mit dem Übergang verbundenen Energieniveaus im Allgemeinen vom "Zustand" des Quantenemitters abhängen können, welcher Zustand insbesondere von der Umgebung des Quantenemitters beeinflusst werden kann sowie davon, ob der Quantenemitter sich bewegt oder in Ruhe ist. Beispielsweise kann als Quantenemitter ein Atom vorgesehen sein, wobei dieses Atom einen Übergang mit einer bestimmten Energie aufweist, wenn das Atom frei und in Ruhe ist. Diese Energie kann eine Änderung erfahren, wenn beispielsweise das Atom sich bewegt (Doppler-Effekt) oder in einen Kristall eingebaut ist oder einem elektrischen/magnetischen Feld ausgesetzt ist. Wenn nun von einem Licht mit der Energie zur resonanten Anregung des entsprechenden Energieniveaus des Atoms bzw. Quantenemitters die Rede ist, dann kann diese Energie des Lichts auf die verschobene Energie des Übergangs angepasst sein (oder auch nicht), wie weiter unten bei der Beschreibung von Ausführungsbeispielen noch näher erläutert wird.

Über die Anordnung der Quantenemitter kann die Zahl Z der mit dem Licht beleuchteten Quantenemitter beeinflusst werden.

Die Anordnung ist dabei jedenfalls so, dass die optische Dicke (an sich bekanntes, dimensionsloses Maß dafür, wie gut das Licht die Anordnung passieren kann) $\tau > 0$ für das Licht gegeben ist, sodass es zu einer Abschwächung des Lichts kommt. Dies lässt sich typischerweise sicherstellen, indem die Quantenemitter entlang des Propagationspfads gesehen zumindest teilweise hintereinander angeordnet sind. Es sind aber grundsätzlich auch Fälle möglich, bei denen entlang des Propagationspfads gesehen die Quantenemitter ausschließlich nebeneinander, insbesondere ausschließlich normal zur Ausbreitungsrichtung des Lichts, angeordnet sind und ebenfalls eine optische Dicke $\tau > 0$ für das Licht gegeben ist, obgleich eine geometrische Dicke dieser Anordnung praktisch null ist.

Unter Streuung an Z bzw. Z0 Quantenemittern ist klarerweise die quantenmechanische Aufsummierung aller Wahrscheinlichkeitsamplituden für die jeweilige Streuung an jedem dieser Quantenemitter zu verstehen.

Die Anzahl Z0 hängt von der Kopplungsstärke zwischen den Quantenemittern und dem Licht ab, wobei nicht nur vergleichsweise - d.h. insbesondere im Vergleich zu aus dem Stand der Technik bekannten Lösungen - lediglich geringe Kopplungsstärken notwendig sind, sondern prinzipiell auch kein unteres Limit der Kopplungsstärke benötigt wird. Durch die Anordnung der Quantenemitter lässt sich auch die Kopplungsstärke - und damit auch Z0 - bequem beeinflussen, indem die Quantenemitter (für eine stärkere Kopplung) näher oder (für eine schwächere Kopplung) weiter weg vom Propagationspfad angeordnet werden.

D.h. die oben genannte Anordnung der Z bzw. Z0 Quantenemitter ist für eine bestimmte Kopplungsstärke zwischen den Quantenemittern und dem Licht gültig bzw. im Hinblick darauf zu wählen, wobei die Kopplungsstärke maßgeblich von der konkreten Anordnung selbst abhängt.

Der genannte Bereich für Z rund um Z0 sichert für viele Anwendungen eine hinreichende Reinheit der Einzelphotonencharakteristik. Letztere lässt sich beispielsweise in an sich bekannter Weise durch Bestimmung der normierten Korrelationsfunktion zweiter Ordnung, $g^{(2)}(\Delta t)$, in einem sog. Hanbury Brown-Twiss-Setup ermitteln, vgl. M.D. Eisaman et al., Review of Scientific Instruments 82, 071101 (2011). $g^{(2)}(\Delta t=0)$ ist ein Maß für die Wahrscheinlichkeit, dass zur selben Zeit mehr als ein Photon den Querschnitt des Lichtstrahls passiert. Für Licht aus einer perfekten Einzelphotonenquelle gilt entsprechend $g^{(2)}(\Delta t=0)=0$. Mittels der erfindungsgemäßen Vorrichtung lassen sich problemlos Werte von $g^{(2)}(\Delta t=0) \leq 0,01$ erzielen. Gleichzeitig können bequem hohe Einzelphotonenraten erreicht werden, indem die Intensität des einfallenden Lichts entsprechend hoch gewählt wird.

Gegebenenfalls kann eine Aufsammeloptik für den Einzelphotonenstrom vorgesehen sein, um die Einkopplung von Streulicht aus der Umgebung zu vermeiden.

Die erfindungsgemäße Vorrichtung löst die oben genannte Aufgabenstellung:

- Sie ist vom Aufbau her weit weniger komplex als bekannte Lösungen, da keine aufwendig zu präparierenden einzelnen Quantenemitter und keine große Kopplungsstärken der Quantenemitter benötigt werden.

- Unabhängig von der Kopplungsstärke der Quantenemitter an das Licht bzw. die Lichtmode kann immer eine perfekte Einzelphotonen-Charakteristik erreicht werden, indem man die richtige Anzahl an Quantenemittern an den Lichtstrahl koppelt, bzw. indem man deren Kopplungsstärke modifiziert - am einfachsten durch die relative Position der Quantenemitter in der Lichtmode oder z.B. über Polarisation oder Lichtmodendurchmesser.

- Gleichzeitig ist die Einzelphotonenrate (Einzelphotonen pro s) der erfindungsgemäßen Vorrichtung nicht durch die Kopplungsstärke der Quantenemitter an das Licht oder durch eine Aufsammeleffizienz gegeben, sondern kann fast beliebig erhöht werden, indem man die Leistung des einfallenden Lichts erhöht. Lediglich bei extrem hohen Intensitäten wird eine Grenze erreicht, indem dann höherzahlige Photonenkomponenten statistisch eine Rolle zu spielen beginnen und die Wahrscheinlichkeit für die Transmission einer Dreiphotonen-Komponente signifikant steigt.

Konkret werden mit der erfindungsgemäßen Vorrichtung Raten von 0,1*γ leicht realisiert, wobei γ die Zerfallsrate des angeregten Energieniveaus N* ist. Erst bei noch größeren Raten beginnt die oben genannte Wahrscheinlichkeit für die Transmission einer Dreiphotonen-Komponente eine Rolle zu spielen.

Zum Vergleich ist bei bekannten Methoden, die mit einzelnen Atomen arbeiten, das theoretische Limit γ/2, wobei γ die Zerfallsrate des jeweils angeregten Energieniveaus ist. Allerdings ist es in der Praxis in technologisch relevanten Settings nur schwer möglich, sich diesem Limit anzunähern, da die Emission der Einzelphotonen in den gesamten Raumwinkel von $4\pi$ sr erfolgt und das vollständige Aufsammeln der Einzelphotonen nur schwer gelingt bzw. dann mit anderen Nachteilen behaftet ist wie z.B. großen Verlusten, wenn das Licht in eine optische Glasfaser gekoppelt werden soll.

- Die erfindungsgemäße Vorrichtung kann außerdem inhärent sehr robust ausgelegt werden, da für geringe Kopplungsstärken relativ große Quantenemitterzahlen von typischerweise > $10^4$ benötigt werden. Dadurch kann die Sensitivität auf Schwankungen der genauen Anzahl Z der Quantenemitter theoretisch beliebig klein gehalten werden. Wenn bei einem typischen Beispiel die Schwankung der Quantenemitterzahl um einen Mittelwert einer Poisson-Verteilung folgt, nimmt die relative Schwankung der um den Mittelwert fluktuierenden Quantenemitterzahlen mit zunehmendem Z gemäß $2^{0,5}/Z$ ab.

- Darüberhinaus weist die erfindungsgemäße Vorrichtung auch optimale spektrale Eigenschaften auf: Die Wellenlänge der erfindungsgemäßen Einzelphotonenquelle ist durch die Resonanzwellenlänge der Quantenemitter vorgegeben. Nimmt man dafür verschiedene Quantenemitter mit wohlbekannten Übergängen oder Quantenemitter mit unterschiedlichen Übergängen, kann man eine Einzelphotonenquelle mit unterschiedlicher, perfekt reproduzierbarer Wellenlänge erstellen. Darüberhinaus ist es prinzipiell auch möglich, in an sich bekannter Weise, z.B. mittels Magnetfelder, die genaue Energie der Übergänge zu beeinflussen und zu justieren. Gleichzeitig sind die Einzelphotonen auch quantenmechanisch ununterscheidbar, was für viele Protokolle wichtig ist.

Wie bereits erwähnt, muss die Lichtquelle keine Laserquelle sein. Es könnte stattdessen als Lichtquelle auch eine konventionelle Lichtquelle, z.B. eine Leuchtdiode oder eine Gasentladungslampe, plus ein nachgeschalteter schmalbandiger Filter verwendet werden, um eine hinreichend enge Bandbreite des Lichts sicherzustellen. Aufgrund der üblicherweise inhärent scharfen Bündelung des ausgesendeten Lichtstrahls und dessen für die Anwendung benötigten schmalen Frequenzbandbreite ist bei einer bevorzugten Ausführungsform der erfindungsgemäßen Vorrichtung vorgesehen, dass die Lichtquelle eine Laserquelle ist und vorzugsweise mindestens eine Laserdiode umfasst. "Laserquelle" ist hierbei so zu verstehen, dass die Lichtquelle natürlich auch mehrere Lasereinzelquellen umfassen kann. Laserdioden sind dabei besonders kostengünstig und für unterschiedlichste Energien verfügbar.

Wie bereits erwähnt, ist man bei der Realisierung der erfindungsgemäßen Vorrichtung nicht auf Atome als Quantenemitter beschränkt, sondern es können unterschiedlichste Quantenemitter mit geeigneten Energieschemata verwendet werden. Bei einer bevorzugten Ausführungsform der erfindungsgemäßen Vorrichtung ist vorgesehen, dass die Quantenemitter Atome und/oder Ionen und/oder Moleküle und/oder Quantenpunkte und/oder Defekte in Kristallstrukturen umfassen. In der Praxis kann durch diese Wahl einerseits eine gewünschte Energie der Photonen einfach gewählt werden. Andererseits kann auch die Kopplungsstärke durch geeignete Wahl der Atom- / Ionen- / Molekül-/ Quantenpunkt-/ Kristalldefekt-Sorte des jeweiligen Quantenemitters gezielt beeinflusst werden. Schließlich können von diesen Quantenemittern zumindest einzelne Sorten routinemäßig zur Verfügung gestellt werden, was praxisgerechte Anwendungen begünstigt. Bei den Kristallstrukturen kann es sich um zweidimensionale oder dreidimensionale Kristallstrukturen handeln. Geeignete Kristalldefekte in Kristallstrukturen sind z.B. durch Komplexe aus jeweils einem Fremdatom und einer Leerstelle gebildete Farbzentren, beispielsweise ein Stickstoff-Fehlstellenzentrum in Diamant (sog. "nitrogen-vacancy centre"; auch als NV-Zentrum bezeichnet) oder ein Silizium-Fehlstellenzentrum in Diamant (sog. "silicon-vacancy centre"; auch als SiV-Zentrum bezeichnet).

Bei einer bevorzugten Ausführungsform der erfindungsgemäßen Vorrichtung ist vorgesehen, dass mindestens ein optisches Element zur Definition des Propagationspfads vorgesehen ist. Bei dem mindestens einen optischen Element zur Definition bzw. Ausgestaltung des Propagationspfads handelt es sich um mindestens ein an sich bekanntes Element, z.B. um mindestens eine Linse, mit der das Licht in einen bestimmten räumlichen Bereich hinein fokussiert wird, und/oder um mindestens eine optische Faser bzw. um mindestens einen optischen Wellenleiter, mittels welcher bzw. welchen das Licht geführt wird, und/oder um mindestens einen Spiegel und/oder um mindestens eine Blende, mit der der Querschnitt des einfallenden Lichts beschränkt wird. Dabei kann das mindestens eine optische Element unabhängig davon vorgesehen sein, welche Art der Lichtquelle Verwendung findet, also sowohl bei Laserquellen oder anderen Lichtquellen. Vorzugsweise ist dabei das mindestens eine optische Element auf die verwendete Lichtquelle abgestimmt.

Bei einer bevorzugten Ausführungsform der erfindungsgemäßen Vorrichtung ist vorgesehen, dass ein einen Wellenleiterkern umfassender optischer Wellenleiter zur Leitung des Lichts vorgesehen ist und dass die Z Quantenemitter in einem Nahfeld angeordnet sind, wobei das Nahfeld aus dem elektromagnetischen Feld des Lichts im Wellenleiterkern und außerhalb des Wellenleiterkerns besteht.

Optische Wellenleiter sind an sich bekannt. Der Wellenleiterkern stellt ein erstes optisches Medium mit einem Brechungsindex n1 dar und ist von mindestens einem zweiten optischen Medium mit einem Brechungsindex n2 umgeben bzw. grenzt der Wellenleiterkern mit einer optischen Grenzfläche an das mindestens eine zweite optische Medium, welches einen Mantel für den Wellenleiterkern bildet. Für das Licht gilt n1 > n2. Letzteres gewährleistet die Totalreflexion des Lichts und damit den Transport des Lichts im Wellenleiterkern.

Das im Wellenleiter geführte Licht ist dabei räumlich nicht auf den Wellenleiterkern beschränkt, sondern ragt in das mindestens eine zweite optische Medium (als evaneszente Welle) hinein. D.h. das Nahfeld existiert auch außerhalb des Wellenleiterkerns. D.h. die Quantenemitter können auch außerhalb des Wellenleiterkerns angeordnet sein, insbesondere in einem gewissen Normalabstand von einer die optische Grenzfläche ausbildenden Oberfläche des Wellenleiterkerns, wobei der Normalabstand in einer Richtung normal auf die Oberfläche gemessen ist. Beispielsweise kann ein solcher Normalabstand im Bereich von bis zu $5*\lambda_0$ oder bis zu $20*\lambda_0$ liegen, wobei $\lambda_0$ die Vakuum-Wellenlänge des Lichts der Energie E ist.

Weit verbreitete Materialien für optische Wellenleiter bzw. Wellenleiterkerne sind z.B. Si, GaAs, Glas oder Quarzglas oder $SiO_2$.

Der Wellenleiter definiert den Propagationspfad, wobei die Quantenemitter im und/oder außerhalb des Wellenleiterkerns angeordnet sein können.

Die Verwendung eines optischen Wellenleiters begünstigt die Miniaturisierung, sodass eine Integration der Vorrichtung in integrierte optische Schaltkreise, insbesondere in/auf Chips, möglich ist.

Wie gesagt, sind optische Wellenleiter an sich bekannt. Um eine besonders einfache und kostengünstige Realisierung zu ermöglichen, ist es bei einer besonders bevorzugten Ausführungsform der erfindungsgemäßen Vorrichtung vorgesehen, dass der Wellenleiter als optische Faser ausgebildet ist.

Wie bereits erwähnt, bietet sich die Verwendung von Wellenleitern ideal für die Miniaturisierung und Integration in optischen Chips an, wobei der Wellenleiterkern als optische Leiterbahn in oder auf einem Substrat ausgelegt ist. Entsprechend ist es bei einer besonders bevorzugten Ausführungsform der erfindungsgemäßen Vorrichtung vorgesehen, dass der Wellenleiterkern auf einem Substrat angeordnet ist, wobei der Wellenleiterkern bevorzugt zumindest abschnittsweise im Substrat versenkt ist. Die Quantenemitter können entsprechend ebenfalls im Substrat versenkt sein. Als Substrat bietet sich beispielsweise ein photonischer Si-Chip oder ein $SiO_2$-Substrat an. Optische Leiterbahnen können z.B. mit gängigen Lithographie-Methoden und weit verbreiteten Materialien, z.B. Glas, Quarzglas, Si, GaAs etc., hergestellt werden.

Bei einer bevorzugten Ausführungsform der erfindungsgemäßen Vorrichtung ist vorgesehen, dass zur Leitung des Lichts eine photonische Kristall-Faser mit einem hohlen Kern vorgesehen ist, wobei die Quantenemitter vorzugsweise im hohlen Kern angeordnet sind.

Photonische Kristall-Fasern (sog. "photonic-crystal fibres") zur Leitung von Licht sind an sich bekannt und weisen einen Kern auf, der von einer photonischen Kristall-Struktur (dem sog. "cladding") umgeben ist, die einen photonischen Kristall mit einer photonischen Bandlücke ausbildet. Entsprechend können Photonen, deren Energie in der photonischen Bandlücke liegt, nicht in besagter photonischer Kristall-Struktur auftreten. Es ergeben sich somit im Wesentlichen zwei Varianten von photonischen Kristall-Fasern, die grundsätzlich bei der vorliegenden Erfindung eingesetzt werden können, wobei die jeweilige photonische Kristall-Faser den Propagationspfad definiert.

Einerseits können diese Fasern einen Kern aufweisen, der fest ist. In diesem Fall handelt es sich im Wesentlichen um einen Wellenleiter, wie er oben beschrieben ist. Wenn solche photonische Kristall-Fasern bei einer Ausführungsform der erfindungsgemäßen Vorrichtung eingesetzt werden, werden die Quantenemitter, wie oben bereits detailliert geschildert, im Nahfeld des im Kern geleiteten Lichts angeordnet. D.h. die Quantenemitter müssen nicht notwendigerweise im Kern angeordnet sein, sondern können auch außerhalb des Kerns angeordnet sein.

Andererseits können die photonischen Kristall-Fasern einen hohlen Kern aufweisen, in welchem Licht geleitet werden kann, wenn das Licht eine Energie aufweist, die in der Bandlücke der den Kern umgebenden photonischen Kristall-Struktur liegt.

Der hohle Kern ermöglicht nicht nur die Leitung von Licht, sondern auch eine einfach zu bewerkstelligende und räumlich und quantitativ sehr definierte Anordnung von Quantenemittern im Kern und damit im Bereich des Propagationspfads.

Insbesondere können die Quantenemitter dabei gasförmig in den Kern eingebracht werden, wobei das Gas aus den Quantenemittern bestehen oder diese umfassen kann. Der hohle Kern begünstigt dabei auch eine sehr genaue Dosierung der Menge an Gas, die in den Kern eingebracht wird, d.h. die Anzahl an in den Kern eingebrachten Quantenemittern kann hierbei sehr genau festgelegt bzw. bestimmt werden.

Der Vollständigkeit halber sei festgehalten, dass aber auch für solche photonischen Kristall-Fasern mit hohlem Kern grundsätzlich gilt, dass die Quantenemitter lediglich im Nahfeld des im hohlen Kern geleiteten Lichts angeordnet zu sein brauchen. D.h. die Quantenemitter müssen auch in diesem Fall nicht notwendigerweise ausschließlich im (hohlen) Kern angeordnet sein, sondern können auch außerhalb des (hohlen) Kerns angeordnet sein.

Bei einer bevorzugten Ausführungsform der erfindungsgemäßen Vorrichtung ist vorgesehen, dass im Propagationspfad ein Kristall angeordnet ist und dass die Z Quantenemitter durch Kristalldefekte, bevorzugt durch Fremdatome und/oder Fehlstellen, besonders bevorzugt durch Dotieratome, im Kristall ausgebildet sind.

Vorzugsweise ist der Kristall dabei für das verwendete Licht transparent bzw. schwächt das Licht kaum ab.

Als Kristalldefekte kommen, wie bereits erwähnt, z.B. durch Komplexe aus jeweils einem Fremdatom und einer Leerstelle gebildete Farbzentren in Frage, beispielsweise ein Stickstoff-Fehlstellenzentrum in Diamant (sog. "nitrogen-vacancy centre"; auch als NV-Zentrum bezeichnet) oder ein Silizium-Fehlstellenzentrum in Diamant (sog. "silicon-vacancy centre"; auch als SiV-Zentrum bezeichnet). Derartige Farbzentren lassen sich in an sich bekannter Weise erzeugen, z.B. durch Ionenimplantation. Entsprechend lassen sich die Anordnung sowie die Anzahl Z der resultierenden Quantenemitter gezielt beeinflussen.

Auch Fremdatome an sich stellen Kristalldefekte dar. Die Anzahl Z lässt sich in diesem Fall durch die Verteilung der Fremdatome im Kristall beeinflussen, beispielsweise wenn die Einbringung der Fremdatome durch Diffusion erfolgt und die Konzentration der Fremdatome im Kristall entsprechend einem Gaußschen Diffusionsprofil folgt.

Generell, d.h. für beliebige Kristalldefekte, hängt die Anzahl Z außerdem von der Größe und der konkreten Anordnung des Kristalls im Propagationspfad ab. Weiters kann mindestens ein optisches Element vorgesehen sein, um den Propagationspfad so im Kristall zu definieren, dass lediglich ein Bereich des Kristalls mit Z Quantenemittern beleuchtet wird. Insbesondere kommen hierfür Linsen und/oder Blenden in Frage.

Dabei kann der Bereich so gewählt sein, dass die beleuchteten Quantenemitter eine gewünschte bzw. bestimmte Kopplungsstärke aufweisen.

Diese Ausführungsform zeichnet sich durch besondere Robustheit aus.

Insbesondere ist die Anregung des Energieniveaus N* unproblematisch, da die Quantenemitter in den Kristall eingebaut sind und sich daher nicht frei bewegen können, sodass es bei ruhendem Kristall zu keiner Doppler-Verschiebung, d.h. zu einer Energieverschiebung aufgrund des Doppler-Effekts, kommt, die aus der Bandbreite des Übergangs herausführen könnte. Insbesondere ist daher die resonante Anregung des Energieniveaus N* mit dem Licht der Energie E (und der entsprechenden Bandbreite, siehe weiter oben) problemlos möglich. Hierzu sei noch bemerkt, dass zwar andere Effekte in Festkörpern grundsätzlich zu Energieverschiebungen führen können, dass viele dieser Effekte jedoch typischerweise durch an sich bekanntes Kühlen des jeweiligen Festkörpers hinreichend reduziert werden können.

Doch auch bei Vorliegen von Energieverschiebungen aufgrund von Effekten, die sich nicht durch Kühlen hinreichend reduzieren lassen, - oder wenn aus sonstigen Gründen keine oder nur eine eingeschränkte Kühlung in Frage kommt - kann das Funktionieren der erfindungsgemäßen Vorrichtung folgendermaßen gewährleistet werden. Hierzu kann bei Quantenemittern, die einen weiteren Übergang mit der Energie E' vom Energieniveau N1 auf ein darunter liegendes Energieniveau N0 aufweisen, ein zweistufiges Schema angewendet werden, um jene Quantenemitter zu selektieren, für welche besagte Energieverschiebungen hinreichend klein sind (oder in einem bestimmten Bereich liegen). Besagtes zweistufiges Schema ist weiter unten im Zusammenhang mit Ausführungsvarianten, bei denen die Quantenemitter gasförmig vorliegen, näher erläutert. Es basiert darauf, dass mit einem weiteren Licht der Energie E' oder nah um E' ein Teil der Quantenemitter in das Energieniveau N1 angeregt wird, wobei dieser Teil der Emitter eine nur geringe spektrale Verteilung des Übergangs N0 zu N1 sowie des Übergangs N1 zu N* aufweist. Die resultierende spektrale Verteilung des Übergangs N1 zu N* des selektierten Teils der Emitter ist insbesondere kleiner als die spektrale Verteilung des Übergangs N1 zu N* aller im Festkörper vorliegenden Emitter. Sodann kann bei diesen Quantenemittern mit dem Licht der Energie E, wobei jene nun die Energie des Übergangs N1 zu N* der selektierten Quantenemitter darstellt, das Energieniveau N* ausgehend vom Energieniveau N1 gezielt angeregt werden, um letztlich unter Ausnutzung der geschilderten photonenzahlabhängigen Streuung einen Einzelphotonenstrom der Energie E zu erzeugen.

Der Vollständigkeit halber sei in diesem Zusammenhang außerdem bemerkt, dass aufgrund der typischerweise eine Rolle spielenden niedrigen Lichtenergien (typischerweise vom UV-C-bis in den nahen IR-B-Bereich, insbesondere entsprechend Vakuum-Wellenlängen im Bereich von 100 nm bis 2000 nm) Rückstoßenergien unproblematisch sind und nicht aus der Bandbreite des Übergangs herausführen. Umso mehr gilt dies natürlich, wenn die erfindungsgemäße Vorrichtung für die Erzeugung von Einzelphotonen noch niedrigerer Energie verwendet wird, beispielsweise für die Erzeugung von Einzelphotonen im (langwelligeren) Terahertzbereich oder im Mikrowellenbereich. Diese Rückstoßenergien resultieren aus dem Rückstoß, der bei der Emission bzw. bei der Absorption von Photonen aufgrund des Impulses der Photonen auftritt.

Denkbar wäre die Verwirklichung des genannten Ausführungsbeispiels z.B. mit einem Diamant-Kristall, in den Fremdatome und/oder Fehlstellen eingebaut sind.

Halbleiter eignen sich in der Praxis aufgrund der guten Verfügbarkeit in hohen Reinheitsgraden besonders gut zur Verwendung bei dem genannten Ausführungsbeispiel. Als Fremdatome kommen sodann insbesondere Dotieratome in Frage, die mit an sich bekannten Techniken kontrolliert in den Kristall eingebracht werden können. Bei einer besonders bevorzugten Ausführungsform der erfindungsgemäßen Vorrichtung ist entsprechend vorgesehen, dass das Material des Kristalls Silizium umfasst und dass die Dotieratome Bor- oder Phosphor-Atome umfassen. D.h. es kann sowohl eine p-Dotierung (dreiwertiges Bor) als auch eine n-Dotierung (fünfwertiges Phosphor) vorgesehen sein.

Wie bereits festgehalten, funktioniert die erfindungsgemäße Vorrichtung auch bei schwacher Kopplung zwischen Quantenemittern und dem Licht, indem die schwache Kopplung gewissermaßen durch eine hohe Anzahl an Quantenemittern kompensiert wird. Entsprechend müssen die Quantenemitter auch nicht unbedingt in einem quasi festen Aggregatzustand vorliegen, sondern können theoretisch auch flüssig bzw. in einer Flüssigkeit oder gasförmig bzw. in einem Gas vorliegen. Dabei können die Quantenemitter z.B. in einer transparenten Flüssigkeit / in einem transparenten Gas vorliegen oder selbst die Flüssigkeit / das Gas im Wesentlichen ausbilden. Entsprechend ist es bei einer bevorzugten Ausführungsform der erfindungsgemäßen Vorrichtung vorgesehen, dass die Quantenemitter im Bereich des Propagationspfads gasförmig vorliegen. Das Gas kann z.B. in einem transparenten Behältnis vorliegen bzw. in einem Behältnis mit einem transparenten Eingang für das Licht und einem transparenten Ausgang für den Einzelphotonenstrom. Es wäre aber auch denkbar, dass sich die Lichtquelle und ggf. ein Detektor oder Leiter für den Einzelphotonenstrom im Gas befinden. Weiters wäre es auch denkbar, ein im Bereich des Propagationspfads strömendes Gas zu durchleuchten. Wie weiter oben bereits geschildert, kann das Gas auch im hohlen Kern einer photonischen Kristall-Faser angeordnet sein, wobei die Ein- und Auskopplung des Lichts in die photonische Kristall-Faser bzw. in deren hohlen Kern in an sich bekannter Weise erfolgt. Weiters kann das Gas auch an einem Wellenleiter, insbesondere an einer optischen Faser oder an einem in einem Substrat versenkten Wellenleiter, angeordnet sein, sodass die Quantenemitter zumindest im Nahfeld angeordnet sein können.

Die Anzahl Z der Quantenemitter in einem bestimmten Bereich des Propagationspfads, der insbesondere mittels des mindestens einen optischen Elements definiert sein kann, ist aufgrund der thermischen Bewegung der Quantenemitter im Gas gewissen statistischen Schwankungen unterworfen. Wie bereits weiter oben ausgeführt, kann jedoch die relative Schwankung durch eine entsprechend groß gewählte Anzahl Z hinreichend klein gehalten werden.

Die Quantenemitter weisen aufgrund der thermischen Bewegung eine Geschwindigkeitsverteilung auf, die zumindest näherungsweise durch die Maxwell-Boltzmann-Verteilung beschrieben werden kann. Gemäß dieser Verteilung und in Abhängigkeit von der Temperatur können die Quantenemitter zum Teil Geschwindigkeiten aufweisen, die so groß sind, dass die mit der jeweiligen Geschwindigkeit einhergehende Doppler-Verschiebung (salopp formuliert "sehen" die Quantenemitter aufgrund ihrer Bewegung nicht das Licht mit der Energie E, sondern ein Licht, dessen Energie (Doppler-)verschoben ist) größer als die Bandbreite des Übergangs vom Energieniveau N* zu N1 ist. Bei solchen Quantenemittern kann mit dem Licht der Energie E (und der entsprechenden Bandbreite, siehe weiter oben) grundsätzlich keine resonante Anregung erfolgen.

Zur beispielhaften Illustration seien als Quantenemitter gasförmige Cäsium-Atome und der Cs-$D_2$-Übergang mit einer Energie von ca. 1,45 eV bzw. einer Vakuum-Wellenlänge von ca. 852 nm bzw. einer Frequenz von ca. 352 THz betrachtet. Die für den Übergang relevante Lebensdauer von ca. 30,5 ns resultiert in einer Bandbreite des Übergangs von ca. $2*10^{-8}$ eV, was einer Frequenz von ca. 5 MHz entspricht. Das Maximum der Maxwell-Boltzmann-Verteilung (durch Ableiten und Nullsetzen der Geschwindigkeitsverteilung erhältlich) liefert als wahrscheinlichste Geschwindigkeit eines Gasteilchens $v_m = (2*k_B*T/m)^{0,5}$, wobei $k_B$ die Boltzmann-Konstante bezeichnet, T die Temperatur und m die Masse des Gasteilchens. Für die Cs-Atome mit einer Masse von 132,9 u (atomare Masseeinheiten) ergibt sich bei T = 300 K somit $v_m \approx 193,7$ m/s. Die resultierende Doppler-Verschiebung beträgt ca. 227 MHz bzw. $9,4*10^{-7}$ eV und ist somit deutlich größer als die Bandbreite des Übergangs. Die resonante Anregung des Übergangs wäre bei dieser Doppler-Verschiebung somit nicht möglich.

Andererseits gewährleistet die Maxwell-Boltzmann-Verteilung aber auch, dass es hinreichend langsame Quantenemitter gibt, für die die Doppler-Verschiebung kleiner als die Bandbreite des Übergangs vom Energieniveau N* zu N1 ist. D.h. für diese Quantenemitter ist die Doppler-Verschiebung so klein, dass eine resonante Anregung möglich ist. Typischerweise liegt der Anteil dieser Quantenemitter an den gesamten Quantenemittern im einstelligen Prozentbereich.

Indem sichergestellt wird, dass hinreichend viele Quantenemitter insgesamt beleuchtet werden, kann somit auch sichergestellt werden, dass statistisch die Anzahl Z der beleuchteten Quantenemitter jene ist, die eine hinreichend geringe Geschwindigkeit aufweisen. Hierzu kann nicht nur der Propagationspfad geeignet definiert werden, sondern es kann z.B. die Temperatur geeignet gewählt werden, um die Anzahl der hinreichend langsamen Quantenemitter zu justieren. Weiters kann z.B. die Gesamtzahl der Quantenemitter variiert/erhöht werden - insbesondere durch Variation/Erhöhung des Gasdrucks, wenn das Gas im Wesentlichen nur aus den Quantenemittern besteht -, um somit auch die Anzahl der hinreichend langsamen Quantenemitter zu variieren/erhöhen.

Bei einer besonders bevorzugten Ausführungsform der erfindungsgemäßen Vorrichtung ist vorgesehen, dass die Quantenemitter einen weiteren Übergang mit der Energie E' vom Energieniveau N1 auf ein darunterliegendes Energieniveau N0 aufweisen, dass mindestens eine Lichtquelle zur Abgabe von weiterem Licht, vorzugsweise einer weiteren Lichtmode, vorgesehen ist, wobei das weitere Licht die Energie E' aufweist, um bei Quantenemittern das Energieniveau N1 resonant anzuregen und sodann mit dem Licht der Energie E bei Z dieser Quantenemitter das Energieniveau N* anzuregen. Das weitere Licht dient also gewissermaßen dazu, durch die resonante Anregung des Energieniveaus N1 aus dem Gas zunächst jene Quantenemitter zu selektieren, die hinreichend langsam sind, d.h. für welche die Doppler-Verschiebung hinreichend klein ist, - die also, überspitzt formuliert, "im Wesentlichen in Ruhe sind". Diese Quantenemitter stehen sodann für den folgenden resonanten Streuprozess, bei dem das Niveau N* ausgehend von N1 resonant angeregt wird, grundsätzlich zur Verfügung, wobei Z dieser Quantenemitter mit dem Licht der Energie E beleuchtet werden.

Vorzugsweise ist das weitere Licht dabei schmalbandig gewählt, also mit einer Bandbreite, die deutlich kleiner ist als jene des weiteren Übergangs.

Mit anderen Worten bestimmt die Beleuchtung mit dem weiteren Licht der Energie E' die Anordnung der Quantenemitter, von welcher Anordnung in weiterer Folge Z Quantenemitter mit dem Licht der Energie E beleuchtet werden. Wenn nämlich die Quantenemitter langsam genug sind, sodass mittels des weiteren Lichts der Energie E' das Energieniveau N1 - ausgehend vom Energieniveau N0 - resonant angeregt werden kann, dann sind diese Quantenemitter auch langsam genug, sodass in der Folge das Energieniveau N* - nun ausgehend vom Energieniveau N1 - mittels des Lichts der Energie E resonant angeregt werden kann.

Es sei bemerkt, dass das Licht der Energie E und das Licht der E' vorzugsweise in einer sog. "Dopplerfreien" Konfiguration gewählt werden können. In dieser Konfiguration propagieren die Lichtstrahlen in gegenläufigen parallelen oder zumindest annähernd parallelen Richtungen. Ebenso ist eine Konfiguration möglich, in welcher die Lichtstrahlen in gleichen parallelen oder zumindest annähernd parallelen Richtungen propagieren.

Weiters ist die Wahl der Übergänge und des Lichts der Energie E bzw. E' vorzugsweise derart, dass sich die Wellenlängen Lichts der Energie E und E' deutlich voneinander unterscheiden, besonders bevorzugt um mindestens 10%. Dies erleichtert in der Praxis die Trennung des generierten Einzelphotonenstroms vom "Selektionslicht" der Energie E', z.B. mittels optischer Filter.

Die Anzahl Z kann weiters wie oben geschildert beeinflusst werden (Definition des Propagationspfads, insbesondere mittels des mindestens einen optischen Elements; Gesamtzahl der Quantenemitter, insbesondere Gasdruck; Temperatur). Insgesamt ergibt sich eine besonders gute Kontrolle der Funktion der erfindungsgemäßen Vorrichtung basierend auf dem geschilderten resonanten Streuprozess.

Denkbar ist, dass die mindestens eine Lichtquelle zur Abgabe von weiterem Licht in die mindestens eine Lichtquelle zur Abgabe des Lichts integriert ist oder von dieser ausgebildet wird.

Die geschilderte Ausführungsvariante lässt sich z.B. mittels Dämpfen aus Alkali-Atomen realisieren, bei denen man mittels Auswahlregeln eine geeignete Wahl an Energieniveaus sicherstellen kann. Entsprechend ist es bei einem besonders bevorzugten Ausführungsbeispiel der erfindungsgemäßen Vorrichtung vorgesehen, dass die Quantenemitter Lithium-Atome und/oder Natrium-Atome und/oder Kalium-Atome und/oder Rubidium-Atome und/oder Cäsium-Atome umfassen.

Z.B. lassen sich folgende Niveaus (in energetisch aufsteigender Reihenfolge) N0, N1, N* wählen (Übergänge bei der Anregung: von N0 auf N1 und von N1 auf N*):

$$N^* = (x-1)D$$

$$N1 = xP$$

$$N0 = xS$$

mit x=2 für Li, x=3 für Na, x=4 für K, x=5 für Rb und x=6 für Cs.

Es sei bemerkt, dass es auch möglich ist, gezielt Quantenemitter, die einer bestimmten Geschwindigkeitsklasse angehören, für die erfindungsgemäße Erzeugung von Einzelphotonen zu verwenden. D.h. es wird hier bewusst Licht mit einer Energie gewählt (beispielsweise unter Verwendung eines durchstimmbaren Lasers als Lichtquelle), die erst aufgrund einer bestimmten Doppler-Verschiebung das Energieniveau N* resonant anregen kann. Entsprechend kann nur bei jenen Quantenemittern, deren Geschwindigkeit in einem passenden Bereich liegt, das Energieniveau N* resonant angeregt werden bzw. tragen nur diese Quantenemitter zur resonanten Streuung bei. Diese Quantenemitter werden vorzugsweise zunächst mit dem weiteren Licht selektiert, wobei die Energie des weiteren Lichts bewusst so gewählt ist (beispielsweise unter Verwendung eines durchstimmbaren Lasers als weitere Lichtquelle), dass erst aufgrund der bestimmten Doppler-Verschiebung das Energieniveau N1 resonant angeregt werden kann. Hierzu sei noch angemerkt, dass die in dieser Weise selektierten Quantenemitter eine nur schmale spektrale Verbreiterung des Übergangs N1 zu N* aufgrund des Doppler-Effekts aufweisen. Bei diesen selektierten Quantenemittern kann sodann das Energieniveau N* ausgehend von N1 mit dem die bestimmte Doppler-Verschiebung aufweisenden Licht gezielt angeregt werden. Mit einer derart ausgelegten Vorrichtung werden somit Einzelphotonen erzeugt, deren Energie die bestimmte Doppler-Verschiebung aufweist.

Schließlich sei nochmals (vgl. weiter oben) festgehalten, dass das geschilderte zweistufige Schema auch auf Ausführungsformen anwendbar ist, bei denen die Quantenemitter durch Kristalldefekte in einem Kristall ausgebildet sind, um dort ggf. auftretenden Verschiebungen von Übergangsenergien Rechnung tragen zu können.

KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:

Fig. 1    eine schematische Darstellung der prinzipiellen Funktionsweise der erfindungsgemäßen Vorrichtung

Fig. 2    eine schematische Darstellung einer Ausführungsform der erfindungsgemäßen Vorrichtung mit einer optischen Faser, wobei Quantenemitter in dieser angeordnet sind

Fig. 3    eine schematische Darstellung einer weiteren Ausführungsform der erfindungsgemäßen Vorrichtung, wobei die Quantenemitter Fremdatome in einem Kristall sind

Fig. 4    eine schematische Darstellung einer weiteren Ausführungsform der erfindungsgemäßen Vorrichtung, wobei die Quantenemitter gasförmig vorliegen

Fig. 5    eine schematische Darstellung einer weiteren Ausführungsform der erfindungsgemäßen Vorrichtung mit einer optischen Faser, wobei die Quantenemitter außerhalb der Faser angeordnet sind

WEGE ZUR AUSFÜHRUNG DER ERFINDUNG

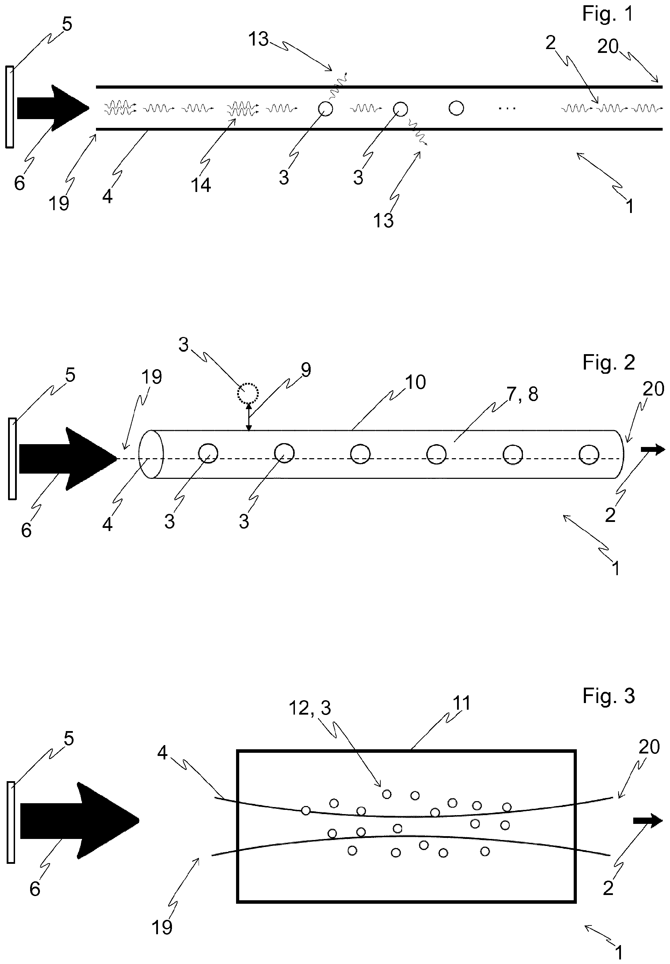

Fig. 1 stellt eine schematische Veranschaulichung des zugrundeliegenden Prinzips der gegenständlichen Erfindung einer Einzelphotonenquelle bzw. einer Vorrichtung 1 zur Erzeugung von Einzelphotonen bzw. eines Einzelphotonenstroms 2 einer bestimmten Energie E dar. Die Vorrichtung 1 nutzt das Prinzip der photonenzahlabhängigen Streuung von Licht 6 der Energie E durch einzelne Quantenemitter 3, wobei die Quantenemitter 3 beispielsweise durch Atome, Ionen, Moleküle, Quantenpunkte oder Defekte in Kristallstrukturen realisiert sein können. Ein Quantenemitter 3, der an das Licht 6 bzw. ein Lichtfeld mit wohldefinierter optischer Mode, wie z.B. einen Laserstrahl aus einer Laserquelle 5, gekoppelt ist, wechselwirkt unterschiedlich mit dem Licht 6, je nachdem ob ein oder zwei Photonen, genauer ob eine Einphotonen-Komponente oder eine Zweiphotonen-Komponente 14 des Lichts 6, am Quantenemitter 3 eintreffen. Lichtmode ist hier so zu verstehen, dass das Licht 6 entlang eines bestimmten Propagationspfads 4 (in Fig. 1 angedeutet durch die zwei durchgezogenen schwarzen Linien) propagiert, der von einem ersten Bereich 19 zu einem zweiten Bereich 20 verläuft. Im Bereich des Propagationspfads 4 sind die Quantenemitter 3 angeordnet. Ggf. können ein oder mehrere optische Elemente vorgesehen sein, um den Propagationspfad 4 genauer zu definieren.

Besagte Komponenten des Lichts 6 können am jeweiligen Quantenemitter 3 gestreut werden oder können auch nicht gestreut werden. Somit kommt es zu einer Interferenz zwischen einer nicht gestreuten Zweiphotonen-Komponente und einer gestreuten Zweiphotonen-Komponente des auslaufenden Lichts 6 für eine gewählte Beobachtungsrichtung bzw. an einem gewählten Beobachtungsort (in Fig. 1 ist aus Klarheits- und Darstellungsgründen nur die Zweiphotonen-Komponente 14 des einlaufenden Lichts 6 gezeigt, nicht jedoch die gestreute und die ungestreute Zweiphotonen-Komponente). Bei der Vorrichtung 1 wird die Beobachtungsrichtung durch den Propagationspfad 4 vorgegeben bzw. entspricht der Beobachtungsort dem zweiten Bereich 20.

Es kommt zu einer photonenzahlabhängigen Phasenverschiebung des Lichts 6, was wiederum zu destruktiver Interferenz der gestreuten Zweiphotonen-Komponente mit der nicht gestreuten Zweiphotonen-Komponente am Beobachtungsort bzw. im zweiten Bereich 20 führen kann. Koppelt man die richtige Anzahl Z0 von Quantenemittern 3 an die Lichtfeldmode, kann man dabei den Punkt perfekter destruktiver Interferenz erreichen, an dem die Verluste für zwei gemeinsam propagierende Photonen 100% betragen. Bemerkenswerterweise zeigen einzelne Photonen an diesem Arbeitspunkt noch eine endliche Transmission. Dadurch hat das durch das Ensemble von Quantenemittern 3 transmittierte Licht 6, abgesehen von statistisch nur bei extrem hohen Intensitäten eine Rolle spielenden Photonenkomponenten höherer Ordnung (Dreiphotonen-Komponente, Vierphotonen-Komponente etc.), eine perfekte Einzelphotonencharakteristik, und man erhält den Einzelphotonenstrom 2. D.h. es kommen nie zwei Photonen gleichzeitig durch das Ensemble.

In Fig. 1 sind durch die vom Propagationspfad 4 weg weisenden gewellten Pfeile Gesamtverluste 13 angedeutet, die die Verluste, die durch die destruktive Interferenz der gestreuten und nicht gestreuten Zweiphotonen-Komponenten bedingt sind, sowie die Schwächung der Einzelphotonen-Komponente umfassen.

Bei der besagten Streuung der Zweiphotonen-Komponente 14 des Lichts 6 handelt es sich um eine resonante Streuung, d.h. die Quantenemitter 3 weisen einen Übergang mit der Energie E von einem Energieniveau N* auf ein darunterliegendes Energieniveau N1 auf, wobei das Energieniveau N* durch das Licht 6 bzw. dessen Zweiphotonen-Komponente 14 der Energie E angeregt wird.

Der guten Ordnung halber sei auch an dieser Stelle bemerkt, dass die Energie E nicht als unendlich scharfer Wert zu verstehen ist, sondern als Wert mit einer gewissen Bandbreite, die durch die Bandbreite besagten Übergangs bzw. durch die Lebensdauer des Energieniveaus N* gegeben ist. Entsprechend bedeutet "Licht 6 der Energie E (zur resonanten Anregung des Energieniveaus N*)" keinen perfekt scharfen Energiewert E des Lichts 6, sondern dass das Licht 6 mit einer Bandbreite rund um den Energiewert E vorliegt, wobei die Bandbreite von derselben Größenordnung wie oder kleiner als die Bandbreite des Übergangs vom Energieniveau N* auf das Energieniveau N1 sein muss.

Erfindungsgemäß ist die Anordnung der Quantenemitter 3 derart, dass lediglich genau Z Quantenemitter 3 beleuchtet werden, die entlang des Propagationspfads 4 eine optische Dicke $\tau > 0$ für das Licht 6 ausbilden, wobei die Anzahl Z in einem Bereich Z0 $\pm$ 10% liegt und wobei Z0 jene Anzahl ist, bei der die destruktive Interferenz zwischen der an diesen Z0 Quantenemittern 3 gestreuten Zweiphotonen-Komponente des Lichts 6 und der nicht gestreuten Zweiphotonen-Komponente des Lichts 6 maximal ist. Der genannte Bereich für Z rund um Z0 sichert in der Praxis für viele Anwendungen eine hinreichende Reinheit der Einzelphotonencharakteristik des Einzelphotonenstroms 2.

Im Ausführungsbeispiel der Fig. 2 ist ein Wellenleiter in Form einer optischen Faser 7 vorgesehen, in welche in an sich bekannter Weise das Licht 6 einer Laserquelle 5 eingekoppelt wird und die den Propagationspfad 4 (in Fig. 2 angedeutet durch die strichlierte Linie) definiert. Es sei bemerkt, dass der Propagationspfad 4 nicht geradlinig zu sein braucht, sondern - dem konkreten Verlauf der optischen Faser 7 entsprechend - auch praktisch beliebig gekrümmt sein kann. Die optische Faser 7 umfasst einen Faserkern 8 bzw. einen Wellenleiterkern zur Leitung des Lichts 6.

Optische Wellenleiter mit einem Wellenleiterkern sind an sich bekannt. Der Wellenleiterkern bzw. Faserkern 8 stellt ein erstes optisches Medium mit einem Brechungsindex n1 dar und ist von mindestens einem zweiten optischen Medium mit einem Brechungsindex n2 umgeben (in Fig. 2 aus Klarheitsgründen nicht dargestellt) bzw. grenzt der Wellenleiterkern mit einer optischen Grenzfläche an das mindestens eine zweite optische Medium, welches einen Mantel für den Wellenleiterkern bildet. Die optische Grenzfläche wird im dargestellten Ausführungsbeispiel durch die Oberfläche 10 des Faserkerns 8 ausgebildet. Für das Licht 6 gilt n1 > n2. Letzteres gewährleistet die Totalreflexion des Lichts 6 und damit den Transport des Lichts 6 im Wellenleiterkern bzw. Faserkern 8.

Typischerweise wird in der Anwendungspraxis von optischen Fasern 7, insbesondere bei Datenübertragungsanwendungen, Licht 6 verwendet, das eine Energie aufweist, die einer Vakuum-Wellenlänge $\lambda_0$ des Lichts 6 von ca. 100 nm bis ca. 2000 nm , insbesondere von ca. 850 nm bis 1550 nm, entspricht.

Die Z Quantenemitter 3 sind in einem Nahfeld angeordnet, wobei das Nahfeld aus dem elektromagnetischen Feld des Lichts 6 im Wellenleiterkern bzw. Faserkern 8 und außerhalb des Faserkerns 8 besteht. D.h. die Z Quantenemitter 3 müssen nicht, wie im Ausführungsbeispiel der Fig. 2, zwangsläufig innerhalb des Faserkerns 8 angeordnet sein, sondern können auch außerhalb des Faserkerns 8 angeordnet sein, solange sie nur nahe genug zum Faserkern 8 angeordnet sind, um an das Nahfeld hinreichend stark koppeln zu können. Eine solche Anordnung außerhalb des Wellenleiterkerns ist in Fig. 2 durch den punktiert angedeuteten Quantenemitter 3 außerhalb des Faserkerns 8 illustriert, wobei dieser Quantenemitter 3 einen gewissen Normalabstand 9 von der Oberfläche 10 des Faserkerns 8 aufweist und wobei der Normalabstand 9 normal auf die Oberfläche 10 gemessen ist. Um eine hinreichende Kopplung der Quantenemitter 3 an das Nahfeld zu gewährleisten, kann der Normalabstand 9 beispielsweise im Bereich von bis zu 5*$\lambda_0$ oder bis zu 20*$\lambda_0$ liegen, wobei $\lambda_0$ die Vakuum-Wellenlänge des Lichts 6 der Energie E ist. Dabei muss das Lichtfeld außerhalb dieses Normalabstands 9 nicht auf exakt null abgefallen sein.

Das in der optischen Faser 7 geleitete Licht 6 propagiert durch das Ensemble von Z Quantenemittern 3, die im Faserkern 8 angeordnet sind und bei denen es sich insbesondere um Fremdatome oder Quantenpunkte handeln kann. Die Quantenemitter 3 sind dabei entlang des Propagationspfads 4 gesehen hintereinander angeordnet und bilden eine optische Dicke $\tau$ größer null aus, wodurch die Transmission des Lichts 6 grundsätzlich geschwächt wird. Dabei kommt es zur oben beschriebenen resonanten Streuung der Zweiphotonen-Komponente 14 des Lichts 6 an den Quantenemittern 3 und zur destruktiven Interferenz zwischen der gestreuten Zweiphotonen-Komponente und der nicht gestreuten Zweiphotonen-Komponenten. Aus der optischen Faser 7 tritt entsprechend ein Einzelphotonenstrom 2 aus, der gegenüber der Intensität des einfallenden Lichts 6 natürlich deutlich geschwächt ist, aber noch eine endliche Intensität bzw. eine relative hohe Rate von Einzelphotonen pro Sekunde aufweist (in Fig. 2 durch die unterschiedlich dimensionierten Pfeile für das einfallende Licht 6 und den Einzelphotonenstrom 2 angedeutet).

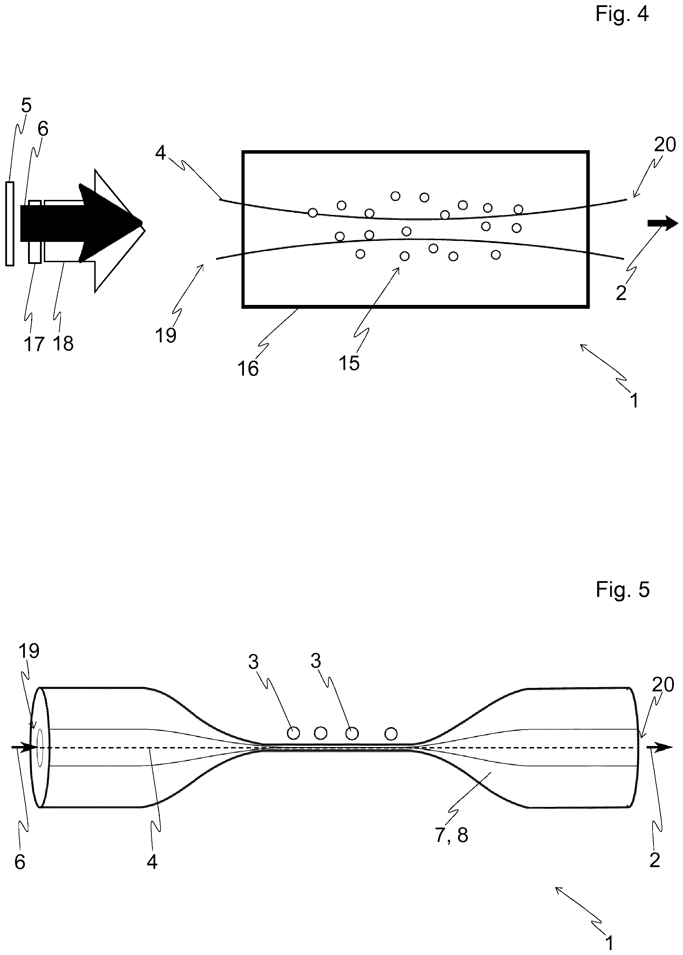

Fig. 5 zeigt ein weiteres Ausführungsbeispiel mit einer optischen Faser 7, wobei in diesem Fall die Quantenemitter 3 nicht im Faserkern 8, sondern außerhalb des Faserkerns 8 angeordnet sind. Konkret weist der Faserkern 8 einen Bereich mit einem verengten Querschnitt bzw. mit einer kleinsten lateralen Abmessung auf, wobei entlang von diesem Bereich die Quantenemitter 3 angeordnet sind. Diese Anordnung kann in an sich bekannter Weise z.B. mittels einer optischen Falle erfolgen, vgl. z.B. R. Mitsch et al., Physical Review A 89, 063829 (2014). Beispielsweise kann es sich bei den Quantenemittern 3 um Cs-Atome handeln, wobei der Übergang zwischen den Energieniveaus N* und N1 durch die Cs-$D_2$-Linie mit einer Vakuum-Wellenlänge $\lambda_0$ ≈ 852 nm gegeben ist.

Es kommt daher auch beim Ausführungsbeispiel der Fig. 5 zur oben beschriebenen resonanten Streuung der Zweiphotonen-Komponente 14 des Lichts 6 an den Quantenemittern 3 und zur destruktiven Interferenz zwischen der gestreuten Zweiphotonen-Komponente und der nicht gestreuten Zweiphotonen-Komponenten im zweiten Bereich 20, sodass aus der optischen Faser 7 ein Einzelphotonenstrom 2 austritt.

Fig. 3 zeigt eine schematische Darstellung einer weiteren Ausführungsform der erfindungsgemäßen Vorrichtung 1, wobei die Quantenemitter 3 durch Kristalldefekte in Form von Fremdatomen 12 in einem Kristall 11 verwirklicht sind. Beispielsweise kann es sich bei dem Kristall 11 um einen Halbleiterkristall, insbesondere um einen Silizium-Kristall, handeln, wobei als Fremdatome 12 Dotieratome, beispielsweise Bor- oder Phosphor-Atome, vorgesehen sind. Der Kristall 11 ist dabei für das verwendete Licht 6 transparent bzw. schwächt das Licht 6 kaum ab.

Auch bei diesem Ausführungsbeispiel können ein oder mehrere optische Elemente (nicht dargestellt) vorgesehen sein, um den Propagationspfad 4 (in Fig. 3 durch die gekrümmten durchgezogenen Linien angedeutet) zu definieren. Beispielsweise kann mindestens eine Linse (nicht dargestellt) zur Fokussierung des Lichts 6 auf einen begrenzten räumlichen Bereich des Kristalls 11 vorgesehen sein, sodass sich der in Fig. 3 dargestellte Propagationspfad 4 ergibt. Im Bereich dieses Propagationspfads 4 sind die Z Quantenemitter 3 angeordnet, die vom Licht 6 beleuchtet werden. Wiederum kommt es zur oben beschriebenen resonanten Streuung der Zweiphotonen-Komponente 14 des Lichts 6 an den Quantenemittern 3 und zur destruktiven Interferenz zwischen der gestreuten Zweiphotonen-Komponente und der nicht gestreuten Zweiphotonen-Komponenten im zweiten Bereich 20. Aus dem Kristall 11 tritt entsprechend ein Einzelphotonenstrom 2 aus, der gegenüber der Leistung des einfallenden Lichts 6 natürlich deutlich geschwächt ist, aber noch eine endliche Leistung bzw. eine relative hohe Rate von Einzelphotonen pro Sekunde aufweist (in Fig. 3 durch die unterschiedlich dimensionierten Pfeile für das einfallende Licht 6 und den Einzelphotonenstrom 2 angedeutet).

Fig. 4 zeigt eine schematische Darstellung einer weiteren Ausführungsform der erfindungsgemäßen Vorrichtung 1, wobei die Quantenemitter 3 gasförmig vorliegen. Insbesondere können die Quantenemitter 3 dabei durch Atome ausgebildet sein, beispielsweise kann es sich beim Gas aus Quantenemittern 3 um verdampfte Alkali-Atome handeln. Grundsätzlich kann das Gas aus Quantenemittern 3 Teil eines anderen, insbesondere transparenten oder kaum absorbierenden, Gases sein. Im dargestellten Ausführungsbeispiel ist ein Gas 15 illustriert, das nur aus atomaren Quantenemittern 3 besteht.

Im dargestellten Ausführungsbeispiel ist das Gas 15 in einem für das Licht 6 transparenten Behältnis 16 angeordnet, sodass das Licht 6 im Wesentlichen ungehindert durch die Wände des Behältnisses 16 treten kann. D.h. eine Schwächung des Lichts 6 beim Durchgang durch das Behältnis wird im Wesentlichen nur durch das Gas 15 verursacht.

Auch bei diesem Ausführungsbeispiel können ein oder mehrere optische Elemente (nicht dargestellt) vorgesehen sein, um den Propagationspfad 4 (in Fig. 4 durch die gekrümmten durchgezogenen Linien angedeutet) zu definieren. Beispielsweise kann mindestens eine Linse (nicht dargestellt) zur Fokussierung des Lichts 6 auf einen begrenzten räumlichen Bereich innerhalb des Behältnisses 16 vorgesehen sein, sodass sich der in Fig. 4 dargestellte Propagationspfad 4 ergibt. Im Bereich dieses Propagationspfads 4 sind die Z Quantenemitter 3 angeordnet, die vom Licht 6 beleuchtet werden.

Es sei bemerkt, dass statt des Behältnisses 16 z.B. auch eine photonische Kristall-Faser mit einem hohlen Kern vorgesehen sein kann, wobei das Gas 15 der Quantenemitter 3 im hohlen Kern angeordnet ist. Die photonische Kristall-Faser bzw. der Verlauf ihres hohlen Kerns gibt dabei gleichzeitig den Propagationspfad 4 vor.

Die Anordnung dieser Z Quantenemitter 3 im Gas 15 ist jedenfalls nicht statisch, sondern eine momentane Anordnung, da sich die Quantenemitter 3 bewegen. Dabei kann die Geschwindigkeitsverteilung der Quantenemitter 3 zumindest näherungsweise durch die Maxwell-Boltzmann-Verteilung beschrieben werden. Aufgrund des Doppler-Effekts ist die Energie E des Übergangs zwischen den Energieniveaus N* auf N1 in Abhängigkeit von der Geschwindigkeit des jeweiligen Quantenemitters 3 verschoben (sog. "Doppler-Verschiebung"). Je nach Temperatur gibt es gemäß der Geschwindigkeitsverteilung mehr oder weniger Atome, deren Geschwindigkeit so groß ist, dass die resultierende Doppler-Verschiebung größer als die Bandbreite des Übergangs ist, sodass eine resonante Anregung des Energieniveaus N* mittels des Lichts 6 der Energie E für diese Atome nicht möglich ist.

Zur beispielhaften Illustration seien als Quantenemitter gasförmige Cäsium-Atome und der $Cs-D_2$-Übergang mit einer Energie von ca. 1,45 eV bzw. einer Vakuum-Wellenlänge von ca. 852 nm bzw. einer Frequenz von ca. 352 THz betrachtet. Die für den Übergang relevante Lebensdauer von ca. 30,5 ns resultiert in einer Bandbreite des Übergangs von ca. $2*10^{-8}$ eV, was einer Frequenz von ca. 5 MHz entspricht. Das Maximum der Maxwell-Boltzmann-Verteilung liefert als wahrscheinlichste Geschwindigkeit $v_m$ eines Cs-Atoms bei einer Temperatur von T = 300 K $v_m \approx 193{,}7$ m/s. Die resultierende Doppler-Verschiebung beträgt ca. 227 MHz bzw. $9{,}4*10^{-7}$ eV und ist somit deutlich größer als die Bandbreite des Übergangs.

Gemäß der Maxwell-Boltzmann-Verteilung gibt es aber auch eine Fraktion von Atomen, die so langsam sind, dass die Doppler-Verschiebung nicht aus der Bandbreite des Übergangs herausführt. Für diese Atome ist eine resonante Anregung mittels des Lichts 6 der Energie E weiterhin möglich. Im Ausführungsbeispiel der Fig. 4 kann durch geeignete Wahl des Propagationspfads 4 sichergestellt werden, dass statistisch genau Z Quantenemitter 3 des Gases 15 beleuchtet werden, wobei diese Z Quantenemitter 3 langsam genug für eine resonante Anregung des Energieniveaus N* sind.

Es sei bemerkt, dass bei der oben erwähnten Variante mit der photonischen Kristall-Faser der Propagationspfad 4 zwar durch den Verlauf des hohlen Kerns vorgegeben ist, letzterer aber ein sehr genau definiertes Volumen darstellt. Entsprechend lässt sich die Anzahl der im hohlen Kern angeordneten Quantenemitter 3 sehr genau einstellen, wodurch ebenfalls sichergestellt werden kann, dass statistisch genau Z Quantenemitter 3 des Gases 15 beleuchtet werden, wobei diese Z Quantenemitter 3 langsam genug für eine resonante Anregung des Energieniveaus N* sind.

Mit der Vorrichtung 1 des Ausführungsbeispiels der Fig. 4 wird ein zweistufiges Verfahren realisiert, um die Funktion der erfindungsgemäßen Vorrichtung 1 unter Ausnutzung des geschilderten resonanten Streuprozesses besonders gut kontrollieren zu können: zunächst werden aus sämtlichen Quantenemittern 3 des Gases 15 jene vorselektiert, die langsam genug sind, um für eine resonante Streuung mit dem Licht 6 in Frage zu kommen; von diesen wiederum werden sodann Z Quantenemitter 3 mit dem Licht 6 beleuchtet. Hierfür weisen die Quantenemitter 3 einen weiteren Übergang mit der Energie E' vom Energieniveau N1 auf ein darunterliegendes Energieniveau N0 auf, und ist eine weitere Laserquelle 17 zur Abgabe von weiterem Licht 18, vorzugsweise einer weiteren Lichtmode, vorgesehen, wobei das weitere Licht 18 die Energie E' aufweist. Im dargestellten Ausführungsbeispiel fällt das weitere Licht 18 unter derselben bzw. parallelen Richtung oder annähernd unter derselben bzw. parallelen Richtung wie das Licht 6 auf die Quantenemitter 3, es wäre aber z.B. auch eine gegenläufige Anordnung denkbar. Die Auslegung ist dabei folgendermaßen: Wenn die Quantenemitter 3 langsam genug sind, sodass mittels des weiteren Lichts 18 der Energie E' das Energieniveau N1 - ausgehend vom Energieniveau N0 - resonant angeregt werden kann, dann sind diese Quantenemitter 3 auch langsam genug, sodass in der Folge das Energieniveau N* - nun ausgehend vom Energieniveau N1 - mittels des Lichts 6 der Energie E resonant angeregt werden kann. Nur die Anordnung dieser Z Quantenemitter 3 spielt sodann für den resonanten Streuprozess eine Rolle, wobei es zur destruktiven Interferenz zwischen der gestreuten Zweiphotonen-Komponente und der nicht gestreuten Zweiphotonen-Komponenten des Lichts 6 kommt. Aus dem Behältnis 16 tritt entsprechend ein Einzelphotonenstrom 2 aus, der gegenüber der Intensität des einfallenden Lichts 6 natürlich deutlich geschwächt ist, aber noch eine endliche Intensität bzw. eine relative hohe Rate von Einzelphotonen pro Sekunde aufweist (in Fig. 4 durch die unterschiedlich dimensionierten Pfeile für das einfallende Licht 6 und den Einzelphotonenstrom 2 angedeutet).

Dämpfe von Alkali-Atomen, insbesondere von Natrium-, Rubidium- oder Cäsium-Atomen, eignen sich zur Verwirklichung dieses Ausführungsbeispiels. Z.B. lassen sich für Cäsium-Atome folgende atomare Energieniveaus (in energetisch aufsteigender Reihenfolge) N0, N1, N* wählen (Übergänge bei der Anregung: von N0 auf N1 und von N1 auf N*): N* = 5D, N1 = 6P und N0 = 6S.

BEZUGSZEICHENLISTE

1 Vorrichtung
2 Einzelphotonenstrom
3 Quantenemitter, insbesondere Atom, Ion, Molekül oder Quantenpunkt
4 Propagationspfad
5 Laserquelle
6 Licht
7 Optische Faser
8 Faserkern
9 Normalabstand
10 Oberfläche des Faserkerns
11 Kristall
12 Fremdatome
13 Gesamtverluste
14 Zweiphotonen-Komponente des einlaufenden Lichts
15 Atomares Gas
16 Behältnis für das Gas
17 Weitere Laserquelle
18 Weiteres Licht
19 Erster Bereich
20 Zweiter Bereich

**Patentansprüche**

1. Vorrichtung (1) zur Erzeugung von Einzelphotonen (2) mit einer Energie E, umfassend eine Vielzahl von Quantenemittern (3), die zumindest einen bestimmten Übergang mit der Energie E von einem Energieniveau N* auf ein darunterliegendes Energieniveau N1 aufweisen,

   wobei die Quantenemitter (3) im Bereich eines von einem ersten Bereich (19) zu einem zweiten Bereich (20) verlaufenden Propagationspfads (4) angeordnet sind,

   die Vorrichtung (1) weiters umfassend mindestens eine Lichtquelle (5) zur Abgabe von Licht (6), vorzugsweise einer Lichtmode, zur Ausbreitung entlang des Propagationspfads (4), wobei das Licht (6) die Energie E zur resonanten Anregung des Energieniveaus N* aufweist, wobei die Quantenemitter (3) derart angeordnet sind, dass lediglich genau Z Quantenemitter (3) beleuchtet werden, die entlang des Propagationspfads (4) eine optische Dicke $\tau > 0$ für das Licht (6) ausbilden, wobei die Anzahl Z in einem Bereich Z0 $\pm$ 10% liegt und wobei Z0 jene Anzahl ist, bei der im zweiten Bereich (20) eine destruktive Interferenz zwischen einer an diesen Z0 Quantenemittern (3) gestreuten Zweiphotonen-Komponente des Lichts (6) und einer nicht gestreuten Zweiphotonen-Komponente des Lichts (6) maximal ist.

2. Vorrichtung (1) nach Anspruch 1, wobei die Lichtquelle eine Laserquelle (5) ist und vorzugsweise mindestens eine Laserdiode umfasst.

3. Vorrichtung (1) nach einem der Ansprüche 1 bis 2, wobei die Quantenemitter (3) Atome und/oder Ionen und/oder Moleküle und/oder Quantenpunkte und/oder Defekte in Kristallstrukturen umfassen.

4. Vorrichtung (1) nach einem der Ansprüche 1 bis 3, wobei mindestens ein optisches Element zur Definition des Propagationspfads vorgesehen ist.

5. Vorrichtung (1) nach einem der Ansprüche 1 bis 4, wobei ein einen Wellenleiterkern (8) umfassender optischer Wellenleiter (7) zur Leitung des Lichts (6) vorgesehen ist und dass die Z Quantenemitter (3) in einem Nahfeld angeordnet sind, wobei das Nahfeld aus dem elektromagnetischen Feld des Lichts (6) im Wellenleiterkern (8) und außerhalb des Wellenleiterkerns (8) besteht.

6. Vorrichtung (1) nach Anspruch 5, wobei der Wellenleiter als optische Faser (7) ausgebildet ist.

7. Vorrichtung (1) nach Anspruch 5, wobei der Wellenleiterkern auf einem Substrat angeordnet ist, wobei der Wellenleiterkern bevorzugt zumindest abschnittsweise im Substrat versenkt ist.

8. Vorrichtung (1) nach einem der Ansprüche 1 bis 5, wobei zur Leitung des Lichts (6) eine photonische Kristall-Faser mit einem hohlen Kern vorgesehen ist, wobei die Quantenemitter (3) vorzugsweise im hohlen Kern angeordnet sind.

9. Vorrichtung (1) nach einem der Ansprüche 1 bis 4, wobei im Propagationspfad (4) ein Kristall (11) angeordnet ist und wobei die Z Quantenemitter (3) durch Kristalldefekte, bevorzugt durch Fremdatome (12) und/oder Fehlstellen, besonders bevorzugt durch Dotieratome, im Kristall (11) ausgebildet sind.

10. Vorrichtung (1) nach Anspruch 9, wobei das Material des Kristalls (11) Silizium umfasst und dass die Dotieratome Bor- oder Phosphor-Atome umfassen.

11. Vorrichtung (1) nach einem der Ansprüche 1 bis 8, wobei die Quantenemitter (3) im Bereich des Propagationspfads (4) gasförmig vorliegen.

12. Vorrichtung (1) nach einem der Ansprüche 9 bis 11, wobei die Quantenemitter (3) einen weiteren Übergang mit der Energie E' vom Energieniveau N1 auf ein darunterliegendes Energieniveau N0 aufweisen, wobei mindestens eine Lichtquelle (17) zur Abgabe von weiterem Licht (18), vorzugsweise einer weiteren Lichtmode, vorgesehen ist, wobei das weitere Licht (18) die Energie E' aufweist, um bei Quantenemittern (3) das Energieniveau N1 resonant anzuregen und sodann mit dem Licht (6) der Energie E bei Z dieser Quantenemitter (3) das Energieniveau N* anzuregen.

13. Vorrichtung (1) nach einem der Ansprüche 11 bis 12, wobei die Quantenemitter (3) Lithium-Atome und/oder Natrium-Atome und/oder Kalium-Atome und/oder Rubidium-Atome und/oder Cäsium-Atome umfassen.

## Claims

1. Device (1) for generating single photons (2) with an energy E, comprising a plurality of quantum emitters (3) which have at least one determined transition with the energy E from an energy level N* to a lower energy level N1, wherein the quantum emitters (3) are arranged in the region of a propagation path (4) extending from a first region (19) to a second region (20), the device (1) further comprising at least one light source (5) for emitting light (6), preferably of one light mode, for propagation along the propagation path (4), wherein the light (6) has the energy E for resonantly exciting the energy level N*, wherein the quantum emitters (3) are arranged in such a way that only exactly Z quantum emitters (3) are illuminated, which form an optical thickness $\tau > 0$ for the light (6) along the propagation path (4), the number Z lying in a range Z0 $\pm$ 10%, and wherein Z0 is that number at which, in the second region (20), a destructive interference between a two-photon component of the light (6) that is scattered at these Z0 quantum emitters (3) and a two-photon component of the light (6) that is not scattered is at a maximum.

2. Device (1) according to claim 1, wherein the light source is a laser source (5) and preferably comprises at least one laser diode.

3. Device (1) according to any one of claims 1 to 2, wherein the quantum emitters (3) comprise atoms and/or ions and/or molecules and/or quantum dots and/or defects in crystal structures.

4. Device (1) according to any one of claims 1 to 3, wherein at least one optical element is provided for defining the propagation path.

5. Device (1) according to any one of claims 1 to 4, wherein an optical waveguide (7) comprising a waveguide core (8) is provided for guiding the light (6), and in that the Z quantum emitters (3) are arranged in a near field, wherein the near field consists of the electromagnetic field of the light (6) in the waveguide core (8) and outside the waveguide core (8).

6. Device (1) according to claim 5, wherein the waveguide is designed as an optical fibre (7).

7. Device (1) according to claim 5, wherein the waveguide core is arranged on a substrate, wherein the waveguide core is preferably at least in sections sunk into the substrate.

8. Device (1) according to any one of claims 1 to 5, wherein a photonic crystal fibre having a hollow core is provided for guiding the light (6), wherein the quantum emitters (3) are preferably arranged in the hollow core.

9. Device (1) according to any one of claims 1 to 4, wherein a crystal (11) is arranged in the propagation path (4), and wherein the Z quantum emitters (3) are formed by crystal defects, preferably by impurity atoms (12) and/or vacancies, particularly preferably by dopant atoms, in the crystal (11).

10. Device (1) according to claim 9, wherein the material of the crystal (11) comprises silicon, and in that the dopant atoms comprise boron atoms or phosphorus atoms.

11. Device (1) according to any one of claims 1 to 8, wherein the quantum emitters (3) are in gas form in the region of the propagation path (4).

12. Device (1) according to any one of claims 9 to 11, wherein the quantum emitters (3) have a further transition with the energy E' from the energy level N1 to a lower energy level N0, wherein at least one light source (17) is provided for emitting further light (18), preferably of a further light mode, wherein the further light (18) has the energy E', in order to resonantly excite the energy level N1 at quantum emitters (3) and then to excite the energy level N* with the light (6) of energy E at Z of these quantum emitters (3).

13. Device (1) according to any one of claims 11 to 12, wherein the quantum emitters (3) comprise lithium atoms and/or sodium atoms and/or potassium atoms and/or rubidium atoms and/or caesium atoms.


**Revendications**

1. Dispositif (1) pour générer des photons individuels (2) avec une énergie E, comprenant une pluralité d'émetteurs quantiques (3) qui présentent au moins une transition déterminée avec l'énergie E d'un niveau d'énergie N* à un niveau d'énergie N1 inférieur,

   les émetteurs quantiques (3) étant disposés dans la zone d'un trajet de propagation (4) s'étendant d'une première zone (19) à une deuxième zone (20), le dispositif (1) comprenant en outre au moins une source lumineuse (5) pour émettre de la lumière (6), de préférence un mode de lumière, pour la propagation le long du trajet de propagation (4), la lumière (6) présentant l'énergie E pour l'excitation résonante du niveau d'énergie N*, les émetteurs quantiques (3) étant disposés de telle sorte que seuls exactement Z émetteurs quantiques (3) sont éclairés, lesquels forment le long du trajet de propagation (4) une épaisseur optique $\tau > 0$ pour la lumière (6), le nombre Z se situant dans une plage Z0 ± 10% et
   Z0 étant le nombre pour lequel une interférence destructive entre un composant à deux photons de la lumière (6) diffusé par ces Z0 émetteurs quantiques (3) et un composant à deux photons de la lumière (6) non diffusé est maximale dans la deuxième zone (20).

2. Dispositif (1) selon la revendication 1, dans lequel la source lumineuse est une source laser (5) et comprend de préférence au moins une diode laser.

3. Dispositif (1) selon l'une des revendications 1 à 2, dans lequel les émetteurs quantiques (3) comprennent des atomes et/ou des ions et/ou des molécules et/ou des points quantiques et/ou des défauts dans des structures cristallines.

4. Dispositif (1) selon l'une des revendications 1 à 3, dans lequel au moins un élément optique est prévu pour définir le trajet de propagation.

5. Dispositif (1) selon l'une des revendications 1 à 4, dans lequel un guide d'ondes optique (7) comprenant un noyau de guide d'ondes (8) est prévu pour guider la lumière (6) et dans lequel les Z émetteurs quantiques (3) sont disposés dans un champ proche, le champ proche étant constitué par le champ électromagnétique de la lumière (6) dans le noyau de guide d'ondes (8) et à l'extérieur du noyau de guide d'ondes (8).

6. Dispositif (1) selon la revendication 5, dans lequel le guide d'ondes est réalisé sous la forme d'une fibre optique (7).

7. Dispositif (1) selon la revendication 5, dans lequel le noyau de guide d'ondes est disposé sur un substrat, le noyau de guide d'ondes étant de préférence encastré au moins par sections dans le substrat.

8. Dispositif (1) selon l'une des revendications 1 à 5, dans lequel il est prévu pour la conduction de la lumière (6) une fibre à cristal photonique avec un noyau creux, les émetteurs quantiques (3) étant de préférence disposés dans le noyau creux.

9. Dispositif (1) selon l'une des revendications 1 à 4, dans lequel un cristal (11) est disposé dans le trajet de propagation (4) et dans lequel les Z émetteurs quantiques (3) sont formés par des défauts du cristal, de préférence par des atomes étrangers (12) et/ou des défauts, de manière particulièrement préférée par des atomes de dopage, dans le cristal (11).

10. Dispositif (1) selon la revendication 9, dans lequel le matériau du cristal (11) comprend du silicium et dans lequel les atomes de dopage comprennent des atomes de bore ou de phosphore.

11. Dispositif (1) selon l'une des revendications 1 à 8, dans lequel les émetteurs quantiques (3) se présentent sous forme gazeuse dans la zone du trajet de propagation (4).

12. Dispositif (1) selon l'une des revendications 9 à 11, dans lequel les émetteurs quantiques (3) présentent une autre transition avec l'énergie E' du niveau d'énergie N1 à un niveau d'énergie N0 inférieur, dans lequel au moins une source lumineuse (17) est prévue pour émettre une autre lumière (18), de préférence d'un autre mode de lumière, l'autre lumière (18) présentant l'énergie E' afin d'exciter de manière résonante le niveau d'énergie N1 dans le cas d'émetteurs quantiques (3) et d'exciter ensuite le niveau d'énergie N* avec la lumière (6) d'énergie E dans le cas de Z de ces émetteurs quantiques (3).

13. Dispositif (1) selon l'une des revendications 11 à 12, dans lequel les émetteurs quantiques (3) comprennent des atomes de lithium et/ou des atomes de sodium et/ou des atomes de potassium et/ou des atomes de rubidium et/ou des atomes de césium.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **F. RIPKA et al.** *Science,* 2018, vol. 362, 446
- **M.D. EISAMAN et al.** *Review of Scientific Instruments,* 2011, vol. 82, 071101
- **J.C. LOPEZ CARRENO et al.** Joint subnatural-linewidth and single-photon emission from resonance fluorescence. *arXiv:1802.04771v3, Quantum Sci. Technol.,* 2018, vol. 3, 045001
- **D.F. KORNOVAN et al.** Light interaction and quantum transport in atomic chain chirally coupled to a waveguide. *2017 11th International Congress on Engineered Materials Platforms for Novel Wave Phenomena (Metamaterials)*
- **S. MAHMOODIAN et al.** *Physical Review Letters,* 2018, vol. 121, 143601
- **R. MITSCH et al.** *Physical Review A,* 2014, vol. 89, 063829